# EUROPÄISCHE PATENTSCHRIFT

(11) **EP 1 931 525 B1**
(45) Veröffentlichungstag und Bekanntmachung des Hinweises auf die Patenterteilung: **28.12.2011**
(21) Anmeldenummer: 06804334.8
(22) Anmeldetag: 28.09.2006
(51) Int. Cl.: B60C 23/00

(54) **VERFAHREN ZUM BETRIEB EINER REIFENFÜLLANLAGE EINES KRAFTFAHRZEUGES UND REIFENFÜLLANLAGE**
METHOD FOR OPERATING A TYRE INFLATION SYSTEM OF A MOTOR VEHICLE AND TYRE INFLATION SYSTEM
PROCEDE POUR FAIRE FONCTIONNER UNE INSTALLATION DE GONFLAGE DE PNEUMATIQUES D'UN VEHICULE A MOTEUR ET INSTALLATION DE GONFLAGE DE PNEUMATIQUES

(30) Priorität: 28.09.2005 AT 6562005 U
(43) Veröffentlichungstag der Anmeldung: 18.06.2008
(73) Patentinhaber: Magna Steyr Fahrzeugtechnik AG & Co. KG, 8041 Graz (AT)
(72) Erfinder: SANDONI, Germano, A-8041 Graz (AT); RINGDORFER, Martin, A-8784 Trieben (AT)
(74) Vertreter: Rausch, Gabriele
(86) Internationale Anmeldenummer: PCT/AT2006/000393
(87) Internationale Veröffentlichungsnummer: WO 2007/035975

(56) Entgegenhaltungen:
- DE-A1- 3 108 247
- DE-A1- 10 223 257
- DE-A1- 19 804 249
- US-A- 5 674 332
- US-A1- 2004 055 291

## Beschreibung

Die Erfindung betrifft ein Verfahren zum Betrieb einer Reifenfüllanlage eines Kraftfahrzeuges, wobei diese besteht aus einer eine Kompressionsvorrichtung und einen Druckspeicher enthaltenden Druckluftquelle, von der Füllleitungen über Füllventile und je eine Steuerleitung pro Rad über ein Steuerventil zu einem Radventil führen, sowie aus einer Steuereinrichtung. Füllventile können je einem Rad oder je einer Achse zugeordnet sein. Jedem Rad ist ein Steuerventil zugeordnet.

Reifenfüllanlagen werden zur Zeit nur in (meist gepanzerten) Geländefahrzeugen eingesetzt, wo der damit verbundene erhebliche konstruktive Aufwand nicht ins Gewicht fällt. Sie sollen in Zukunft aber auch in Personenkraftwagen verwendet werden, allerdings zur Steigerung des Fahrkomforts. In Zukunft ist damit zu rechnen, dass Reifendruck-Überwachungsanlagen gesetzlich vorgeschrieben werden, dann wird der Mehraufwand geringer sein.

Aus der DE 198 04 249 A1 ist eine gattungsbildende Vorrichtung und ein Verfahren zur Einstellung des Reifendrucks an einem Fahrzeug bekannt. Dabei werden eine Drehdurchführung und eine von einer Steuereinheit gesteuerte Radventilanordnung gelehrt.

Aus der US 5,674,332 ist ein Verfahren zur Druckanpassung der Reifen eines Fahrzeuges bekannt. Dabei wird eine zentrale Aufpump-Installation gelehrt, welche nacheinander jeden Reifen mit einer Druckquelle verbinden kann, gelehrt.

Aus der US2004/0055291 A1 ist eine weitere Reifenfüllanlage bekannt. Dabei wird die Versorgung der Reifenfüllanlage über eine einzige Druckleitung gelehrt.

Aus dem österreichischen Gebrauchsmuster AT 5548 U1 ist eine gattungsgemäße Reifenfüllanlage bekannt, in der der Reifendruck von in die Räder eingebauten Drucksensoren gemessen wird. Die Datenübertragung von dem rotierenden Rad auf das Fahrzeug ist problematisch. Sie erfolgt entweder (wie im AT 5548 U1) über Schleifkontakte und Leitungen zu einer fahrzeugfesten Steuereinheit, oder neuerdings über Funk. Der Nachteil von exponierten Schleifkontakten und Datenleitungen zu den Rädern liegt auf der Hand. Übermittlung über Funk erfordert in jedem Rad nebst den Sensoren einen Sender (wenn auch sehr geringer Reichweite) und eine Stromquelle, beziehungsweise einen Transponder. Die Übermittlung der Messwerte erfolgt in der Regel nicht von allen Rädern zur gleichen Zeit, sondern reihum. Sender und Empfänger in Rad und Fahrzeug und die Notwendigkeit, die Signale der Räder voneinander zu unterscheiden beziehungsweise zu trennen erfordern eine aufwändige Elektronik. Wegen der Laufzeit der Signale ist die Messung nicht einmal genau.

Ein weiteres Problem aller Reifenfüllanlagen ist die Notwendigkeit, zwischen dem Rad und dem Fahrzeug zwei als Dreheintragung ausgebildete Druckluftverbindungen vorzusehen, eine für die Füllleitung und eine für die Steuerleitung, die das im Rad befindliche Radventil betätigt. Dreheintragungen unterliegen erhöhtem Verschleiß, solange sie unter Druck stehen. Deshalb muss die Füllleitung und die Steuerleitung nach Beendigung jedes Füllvorganges drucklos gemacht werden. Bei Beginn des nächsten Füllvorganges muss sie erst wieder aufgefüllt werden. Das bedingt einen Verlust an komprimierter Luft und somit einen Energieverlust, der möglichst klein sein soll.

Es ist daher Aufgabe der Erfindung, eine Reifenfüllanlage und ein Verfahren zu deren Betrieb vorzuschlagen, die die genannten Probleme, insbesondere das der Druckmessung auf möglichst einfache Weise löst.

Das erfindungsgemäße Verfahren besteht in den Schritten a) bis e) des Kennzeichnungsteiles des ersten Anspruches. Dabei werden die einzelnen Reifen reihum diesem Verfahren unterzogen. Die Messung des Reifendruckes ist von den rotierenden Rädern in die fahrzeugfesten Füllleitungen verlegt. Dadurch ist das Problem der Datenübermittlung an die Steuereinheit gelöst. Versuche ergaben, dass eine hinreichend genaue Messung während des Füllens wegen dynamischer Effekte (Drosselverluste in den Leitungen, Druckschwankungen) nicht möglich ist. Deshalb ist der Füllvorgang in abwechselndes Füllen und Messen zerlegt, er ist somit iterativ.

Um möglichst wenig iterative Zyklen durchfahren zu müssen, wird die bestimmte Zeitspanne, während der einem Reifen durch Öffnen des jeweiligen Steuerventils Luft zugeführt wird, aus dem aktuellen Reifendruck, dem Druck-Sollwert und dem Behälterdruck ermittelt (Anspruch 2). Der aktuelle Reifendruck ist der der Steuereinheit von der letzten vorhergehenden Druckmessung gespeicherte. Die Ermittlung kann in einer (mehr oder minder genauen) Vorausberechnung oder in einer groben Abschätzung bestehen.

In Weiterbildung des erfindungsgemäßen Verfahrens wird beim Befüllen und beim Absenken des Reifendruckes in analoger Weise verfahren: Zum Befüllen eines Reifens wird zuerst die Füllleitung mit der Druckquelle verbunden und dann durch Öffnen des jeweiligen Steuerventils während der ermittelten Zeitspanne das jeweilige Radventil geöffnet, und nach Schließen des Radventils die Füllleitung wieder drucklos gemacht (Anspruch 3).

Zum Entnehmen von Luft aus einem Reifen wird die Füllleitung mit einem Ort niedereren Druckes verbunden und die darin befindliche Druckluft durch Betätigen des jeweiligen Steuerventiles und damit durch Öffnen des Radventiles während der bestimmten Zeitspanne zur Druckluftquelle zurückgeführt und dort gespeichert oder in die Umgebung entlassen (Anspruch 5). Dazu wird die Zeitspanne, während der einem Reifen durch Öffnen des jeweiligen Steuerventils Luft entnommen wird, aus dem aktuellen Reifendruck, dem Druck-Sollwert und gegebenenfalls dem Gegendruck ermittelt (Anspruch 4). Der Gegendruck kann der Druck im Speicher der Druckquelle, der Atmosphärendruck oder der um den Druckverlust im Lufttrockner erhöhte Atmosphärendruck sein.

Alternativ kann zum Entnehmen von Luft aus einem Reifen die Füllleitung über ein Schnellentlüftventil geleert werden (Anspruch 6). Damit wird die Zeit, die die Drehdurchführungen unter Druck stehen, verkürzt.

Zum Messen des Reifendruckes wird in einer vorteilhaften Verfahrensführung die jeweilige entleerte Füllleitung (oder eine mit ihr verbundene weitere Fülleitung) an ihrem von dem jeweiligen Reifen abgewandten Ende verschlossen und mittels des jeweiligen Steuerventiles das jeweilige Radventil geöffnet (Anspruch 7). So nimmt die Luft in der Füllleitung beziehungsweise in den Füllleitungen den Druck des jeweiligen Reifens an. Das jeweilige Radventil bleibt geöffnet, bis der Druckausgleich zwischen dem jeweiligen Rad und der Füllleitung erfolgt ist und erst dann wird der Druck in der Füllleitung gemessen (Anspruch 8). Dieser ist dann der Druck in dem jeweiligen Reifen. Sodann wird die jeweilige Füllleitung über das Füllventil entleert (Anspruch 9).

Die Erfmdung betrifft auch eine für die Ausführung des erfindungsgemäßen Verfahrens besonders geeignete Reifenfüllanlage eines Kraftfahrzeuges, welche besteht aus einer eine Kompressionsvorrichtung und einen Druckspeicher enthaltenden Druckluftquelle, von der aus Füllleitungen über ein Füllventil und Steuerleitungen über ein Steuerventil zu mindestens einem Radventil führen, sowie aus einer Steuereinrichtung, wobei die Druckluftquelle eine Kompressionsvorrichtung und einen Druckspeicher enthält.

Erfindungsgemäß ist in der jeweiligen Füllleitung stromabwärts des jeweiligen Füllventils ein Drucksensor angeordnet und ist jedes Füllventil über eine Ablassleitung mit einem Ablassventil verbunden, wobei die Ablassleitungen stromaufwärts des Ablassventils miteinander verbunden sind. So kann der Druck in dem(n) jeweiligen Reifen mit einem ortsfesten Sensor gemessen werden, was eine schnelle und sichere Signalübertragung gewährleistet (Anspruch 10).

Vorzugsweise ist jedes Füllventil ein Dreistellungsventil, dessen Stellungen eine Füllstellung, eine Ablassstellung und eine Messstellung sind (Anspruch 11). Dadurch braucht für die Druckmessung nur die betreffende Füllleitung bis zum Füllventil mit dem Reifen verbunden zu werden, was die Zeit bis zur Stabilisierung des Druckes in der entsprechenden Füllleitung verkürzt und genauere Messungen ergibt.

In Weiterbildung der erfindungsgemäßen Anlage führt von dem Ablassventil eine Rückführleitung über ein zweites Rückschlagventil durch einen Lufttrockner und über ein zweites Ablassventil in die Atmosphäre (Anspruch 12). So kann der Lufttrockner auf einfache und energiesparende Weise regeneriert werden. In einer vorteilhaften Weiterbildung ist die Druckluftzuleitung von der Kompressoreinheit über ein erstes Rückschlagventil und eine Rückfülvrleitung in den Druckspeicher geführt und ist stromabwärts des ersten Rückschlagventils ein weiterer Drucksensor angeordnet. (Anspruch 13). Vorteilhafterweise besteht die Kompressoreinheit aus zwei hinsichtlich der von ihnen geförderten Luft parallel geschalteten Kolbenverdichtern (Anspruch 14).

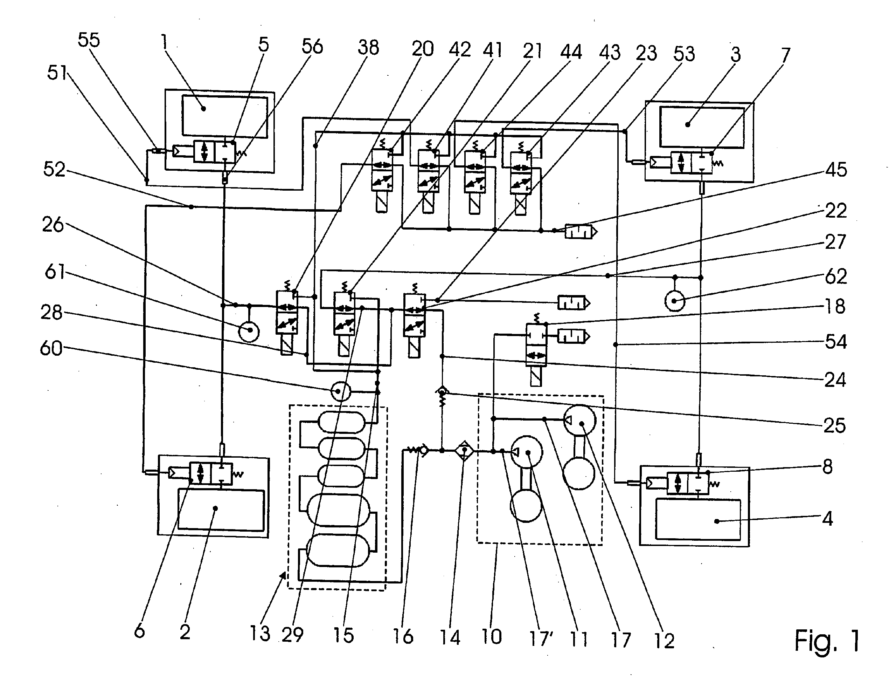

Im folgenden wird die Erfindung anhand einer schematischen Darstellung der erfindungsgemäßen Reifenfüllanlage als einzige Figur beschrieben und erläutert. In **Fig. 1** sind von einem mit der erfindungsgemäßen Anlage ausgestatteten Fahrzeug nur die Räder beziehungsweise deren Reifen 1, 2, 3, 4 mit ihren Radventilen 5, 6, 7, 8 dargestellt. Die Reifen 1, 2 sind beispielsweise die der Vorderräder. Zur Bereitstellung der erforderlichen Druckluft ist eine Kompressionsvorrichtung 10 vorgesehen, die aus einem ersten (11) und zweiten (12) Kompressor besteht. Sie sind jeweils unabhängig voneinander von einem Elektromotor angetrieben, ihre mit der Umgebung in Verbindung stehenden Ansaugtrakte sind nicht dargestellt und ihre Auslassleitungen 17, 17' sind zusammengeführt und über einen Lufttrockner 14 mit einem Druckspeicher 13 verbunden, der als Druckluftquelle dient. Die Auslassleitungen 17, 17' können auch über ein Ventil 18 mit der Umgebung verbunden werden.

Die von der Kompressionsvorrichtung 10 abgegebene Druckluft strömt über ein erstes Rückschlagventil 16 zum Druckspeicher 13. Dieser ist über eine Versorgungsleitung 15 mit einem ersten Füllventil 20 und einem zweiten Füllventil 21 verbunden. Weiters ist ein Ablassventil 22 mit einer ersten Lüftleitung 23 vorgesehen, auf die noch zurückgekommen wird. Vom ersten Füllventil 20 führt eine erste Füllleitung 26 zu den beiden Reifen 1, 2. Vom zweiten Füllventil 21 führt eine zweite Füllleitung 27 zu den Reifen 3, 4. Im gezeigten Ausführungsbeispiel verzweigt sich die Füllleitung auf jeweils beide Räder einer Achse, ebenso könnte für jedes Rad eine eigene Füllleitung und ein eigenes Füllventil vorgesehen sein. Die Füllventile 20, 21 sind im gezeigten Ausführungsbeispiel sogenannte 3/2 -Ventile, das heißt sie können in zwei verschiedenen Stellungen drei Anschlüsse in verschiedener Weise miteinander verbinden. In der einen Stellung verbinden die Füllventile 20 bzw 21 die Versorgungsleitung 15 mit der Füllleitung 26 bzw 27, in der zweiten Stellung verbinden sie letztere mit einer Ablassleitung 28 bzw 29. Die beiden Ablassleitungen 28, 29 sind miteinander verbunden und enden am Ablassventil 22, das auch wieder ein 3/2 - Ventil ist. Alternativ könnte für jede Füllleitung ein eigenes Ablassventil vorgesehen sein. Von diesem führt einerseits die erste Lüftleitung 23 ins Freie und andererseits eine Rückführleitung 24 über ein zweites Rückschlagventil 25 und das erste Rückschlagventil 16 wieder in den Druckspeicher 13.

Von der Versorgungsleitung 15 zweigt eine weitere Versorgungsleitung 38 ab und führt zu den radspezifischen Steuerventilen 41, 42, 43, und 44. Auch diese sind 3/2-Ventile, die entweder die weitere Versorgungsleitung 38 mit jeweils einer Steuerleitung 51, 52, 53 und 54, oder mit einer zweiten Lüftleitung 45, die ins Freie führt, verbinden. Jede der Steuerleitungen 51, 52, 53, 54 führt über eine erste Dreheintragung 55 (nur am Reifen 1 bezeichnet) zum jeweiligen Radventil 5, 6, 7, 8. Die Füllleitungen 26, 27 ihrerseits sind über eine zweite Dreheintragung 56 auch mit dem jeweiligen Radventil 5, 6, 7, 8 leitungsverbunden. Die Radventile werden somit pneumatisch von den Steuerventilen betätigt und können daher die erhebliche Luftströmung trotz geringen Raumbedarfes schnell schalten.

Die Füllventile 20, 21, das als Schnellablassventil ausgebildete Ablassventil 22, das Ablassventil 18 sowie die Steuerventile 41, 42, 43, 44 sind von einer nicht dargestellten Steuereinrichtung angesteuerte Magnetventile. Sie sind in dem Sinne federbelastet, dass sie bei Systemausfall die sichere Stellung einnehmen. Weder die Steuereinrichtung noch die zu den Ventilen führenden Steuerleitungen sind der Übersichtlichkeit zuliebe eingezeichnet. Die Steuereinrichtung ermittelt aus Betriebsgrößen (Fahrzeuggewicht, Radlast, Geschwindigkeit, vom Fahrer gegebenen Kommandos, von vorhergehenden Rechengängen gespeicherten Daten) für jeden der Reifen einen Soll-Druck und vergleicht diesen mit aus dem von den Drucksensoren 61, 62 gemeldeten Druck. Weiters werden von der Steuereinrichtung auch die Antriebsmotoren der Kompressoren 11, 12 angesteuert, wozu als Eingangssignal der vom ersten Drucksensor 60 gemessene Druck im Druckspeicher 13 herangezogen wird. Die Kompressoren 11,12 können einzeln anlaufen, zur Erleichterung des Antriebes sogar bei geöffnetem zweiten Ablassventil 18. Die Steuereinheit enthält weiters ein Programm, das in gewissen Abständen oder bei gewissen Ereignissen den Reifendruck der Reihe nach abfragt, ihn mit dem mittlerweile gegebenenfalls veränderten Solldruck vergleicht und bei Abweichung die beschriebenen Abläufe kommandiert.

Im folgenden wird die Arbeitsweise der erfindungsgemäßen Vorrichtung beschrieben. Bewegt sich das Kraftfahrzeug mit dem unter "richtigen" Luftdruck an allen vier Rädern, ist die Reifenfüllanlage in dem in der einzigen Figur an Hand der Ventilstellungen gezeigten Ruhezustand. Die Kompressoren 11, 12 stehen still, der Druckspeicher 13 ist voll aufgeladen, die Versorgungsleitung 15 steht unter dem maximalen Druck. Die beiden Füllventile 20, 21 sind zur Versorgungsleitung 15 hin geschlossen, ebenso die Steuerventile 41 bis 44. Dadurch werden die Dichtelemente der Dreheintragungen geschont. Die Füllleitungen 26, 27 sind über die Füllventile 20, 21 mit ihren Ablassleitungen 28, 29 in Verbindung. Lediglich das Ablassventil 22 könnte auch (anders als in der Figur dargestellt) geöffnet sein. Somit sind insgesamt die beiden Füllleitungen 26, 27 mit ihren Ablassleitungen 28, 29 und die Steuerleitungen 51 bis 54 drucklos.

Der Reifendruck ist zu erhöhen, wenn entweder die Druckmessung unter den Sollwerten liegende Werte ergibt, oder wenn die Sollwerte sich aufgrund veränderter Betriebsbedingungen oder durch gezielten Eingriff des Fahrers geändert haben. Liegen die gemessenen Werte unter den Sollwerten, beispielsweise in dem Reifen 1 der Vorderachse, so wird das erste Füllventil 20 umgeschaltet, so dass es die Verbindung zwischen der Versorgungsleitung 15 und der ersten Füllleitung 26 herstellt und gleichzeitig das Ablassventil 22 in die Stellung gemäß Abbildung gebracht. Dadurch nimmt die Füllleitung 26 den Druck des Druckspeichers 13 an. Wegen der geschlossenen Radventile 5, 6 kann aber noch keine Luft in die Reifen 1, 2 strömen. Soll nur der Druck im Reifen 1 erhöht werden, so wird nur das erste Steuerventil 41 angesteuert, wodurch das Radventil 5 geöffnet wird und Luft in den Reifen 1 zu strömen beginnt.

Vor beziehungsweise gleichzeitig mit dem Öffnen, hat die Steuereinheit aus dem Druckunterschied zwischen Soll- und Istdruck des jeweiligen Reifens sowie aus dem Druck im Druckspeicher 13 ermittelt (geschätzt oder berechnet), wie lange das Steuerventil 41 und damit das Radventil 5 voraussichtlich geöffnet sein muss, um dem Solldruck möglichst nahe zu kommen. Nach Ablauf dieser ermittelten Zeitspanne wird das Steuerventil 41 wieder geschlossen. Während des Füllens des Reifens 1 schwankt der Druck in der Füllleitung 26 sehr stark und ist wegen der Drosselverluste im Radventil 5 auch wesentlich höher als der Druck im Reifen 1. Deshalb kann der Druck nicht während des Füllens gemessen werden. Die Messung erfolgt erst, nachdem das Radventil geschlossen und zwar wie folgt:
Zur Messung des Druckes wird zunächst die Füllleitung 26 drucklos gemacht, wie in der eingangs definierten Ruhestellung. Dazu wird die Füllleitung 26 über die erste Ablassleitung 28 und das Ablassventil 22 mit der Umgebung verbunden. Dadurch sinkt der Druck in der Füllleitung auf Atmosphärendruck. In der Folge wird das Ablassventil 22 wieder geschlossen, die Füllventile 20, 21 bleiben aber in der gezeigten Stellung, in der sie die Verbindung zwischen der Füllleitung 26 und der Ablassleitungen 28, 29 freigibt. Ebenso könnte auch das jeweilige Füllventil geschlossen werden, wenn reifenseitig ein Drucksensor vorhanden ist, unter Umständen sogar, ohne die jeweilige Füllleitung vorher drucklos zu machen. Wird nun durch Betätigen nur des ersten Steuerventils 41 das Radventil 5 wieder geöffnet, so teilt sich der im Reifen 1 herrschende Druck der ersten Füllleitung 26 und über das erste Füllventil 20, und die Ablassleitungen 28, 29 auch der zweiten Füllleitung 27 mit.

In einer nicht dargestellten Variante sind die Füllventile 20,21 als Dreistellungsventile (3/3 - Ventile) ausgeführt, dann erübrigt sich ein Schließen des Ablassventils 22 und nur die erste Füllleitung nimmt den im jeweiligen Reifen herrschenden Druck an. Nach kurzer Zeit hat der Druckausgleich stattgefunden und der Messwert am ersten Drucksensor 61 kann dem Steuergerät zugeführt und dort mit dem Solldruck verglichen werden. Wenn sich Soll- und Istdruck unterscheiden, wird ein weiterer Zyklus, wie oben beschrieben, ausgeführt. Anstelle des 3/3 - Ventils könnte auch ein 3/2 - Ventils und ein Rückschlagventil eingesetzt sein.

Ist der Druck im ersten Reifen höher als der Sollwert, so muss Luft abgelassen werden. Dazu berechnet das Steuergerät wieder, diesmal aus dem Druck im Reifen 1 und dem Solldruck, die voraussichtliche Öffnungszeit des Steuerventils 41. Zuerst aber wird das erste Füllventil 20 in die in der Abbildung gezeigte Stellung gebracht und so die Verbindung über die erste Ablassleitung 28, das nun geöffnete Ablassventil 22 und die erste Lüftleitung 23 zur Umgebung hergestellt. Nun wird das Steuerventil 41 für die geschätzte Zeit geöffnet, während der Luft aus dem Reifen 1 abströmen kann. Auch hier findet in der Folge wieder eine Druckmessung, wie oben beschrieben, statt. Ist der Druck im Druckspeicher 13 stark abgefallen, kann die abgelassene Luft auch über die beiden Rückschlagventile 25,16 in den Druckspeicher 13 zurückgeführt werden, bei geschlossenem Ablassventil 22.

## Patentansprüche

1. Verfahren zum Betrieb einer Reifenfüllanlage eines Kraftfahrzeuges, wobei die Reifenfüllanlage besteht aus einer eine Kompressionsvorrichtung (10) und einen Druckspeicher (13) enthaltenden Druckluftquelle, von der Füllleitungen (26,27) über ein Füllventil (20,21) und Steuerleitungen (51,52,53, 54) über ein Steuerventil (41,42,43,44) zu einem Radventil (5,6,7,8) führen, sowie aus einer Steuereinrichtung, wobei
a) aus Betriebsgrößen ein Soll- Reifendruck ermittelt wird,
b) der Soll- Reifendruck mit dem zuletzt gemessenen Ist-Reifendruck verglichen und entschieden wird, ob dem jeweiligen Reifen (1,2,3,4) Luft zugeführt oder entnommen werden soll,
c) über das Steuerventil die Steuerleitung mit Druckluft beaufschlagt wird, und dass das über einen Dreheintrag mit der Füllleitung verbundene und am jeweiligen Reifen angeordnete Radventil (5, 6,7, 8) über die Steuerleitung gesteuert wird,
d) dem jeweiligen Reifen (1,2,3,4) über die Füllleitung während einer bestimmten Zeitspanne ohne begleitende Druckmessung Luft zugeführt oder entnommen wird,
e) der Ist-Reifendruck in der Füllleitung (26,27) gemessen und mit dem Soll-Reifendruck verglichen wird,
f) wenn der Ist-Reifendruck nicht ausreichend genau mit dem Soll- Reifendruck übereinstimmt, dem mindestens einen Reifen über die Füllleitung (26,27) während einer bestimmten Zeitspanne ohne begleitende Druckmessung Luft zugeführt oder entnommen wird,
g) wenn der gemessene Ist-Reifendruck ausreichend genau mit dem Soll- Reifendruck übereinstimmt, erst wieder nach einer bestimmten Zeitspanne oder bei Eintreten eines bestimmten Betriebszustandes der Zyklus gemäß a) b) c) d) e) f) wiederholt wird,
**dadurch gekennzeichnet, dass** zusätzlich zu den Füllleitungen (26,27) vorgesehene Steuerleitungen (51,52,53, 54) über ein zusätzlich zu dem Füllventil vorgesehenes Steuerventil (41,42,43,44) zu einem Radventil (5,6,7,8) führen und das am jeweiligen Reifen angeordnete Radventil (5, 6,7, 8) über die Steuerleitung unabhängig von der Füllleitung mit Druckluft gesteuert wird.

2. Verfahren nach Anspruch 1, **dadurch gekennzeichnet, dass** die bestimmte Zeitspanne, während der einem Reifen durch Öffnen des jeweiligen Steuerventils (41, 42, 43, 44) Luft zugeführt wird, aus dem aktuellen Reifendruck, dem Druck-Sollwert und dem Behälterdruck ermittelt wird.

3. Verfahren nach Anspruch 2, **dadurch gekennzeichnet, dass** zum Befüllen eines Reifens zuerst die Füllleitung (26, 27) mit der Druckquelle (13) verbunden und dann durch Öffnen des jeweiligen Steuerventils (41, 42, 43, 44) während der ermittelten Zeitspanne das jeweilige Radventil (5,6,7,8) geöffnet wird.

4. Verfahren nach Anspruch 1, **dadurch gekennzeichnet, dass** die Zeitspanne, während der einem Reifen durch Öffnen des jeweiligen Steuerventils (41,42, 43,44) Luft entnommen wird, aus dem aktuellen Reifendruck, dem Druck-Sollwert ermittelt wird.

5. Verfahren nach Anspruch 4, **dadurch gekennzeichnet, dass** zum Entnehmen von Luft aus einem Reifen die Füllleitung (26, 27) mit einer Ort niedereren Luftdruckes (13; 23) verbunden und die darin befindliche Druckluft durch Betätigen des jeweiligen Steuerventils (41,42, 43,44) und damit durch Öffnen des jeweiligen Radventils (5,6,7,8) während der bestimmten Zeitspanne entweder zur Druckluftquelle (13) zurückgeführt und dort gespeichert oder in die Umgebung entlassen wird.

6. Verfahren nach Anspruch 4, **dadurch gekennzeichnet, dass** zum Entnehmen von Luft aus einem Reifen die Füllleitung über ein Schnellentlüftventil (22) entleerbar ist.

7. Verfahren nach Anspruch 1, **dadurch gekennzeichnet, dass** zum Messen des Reifendruckes die jeweilige entleerte Füllleitung (26,27) durch Ansteuern des jeweiligen Radventils (5,6,7,8) mit dem jeweiligen Reifen (1,2,3,4) strömungsverbunden wird, derweil sie an ihrem anderen Ende verschlossen ist.

8. Verfahren nach Anspruch 7, **dadurch gekennzeichnet, dass** das jeweilige Radventil (5,6,7,8) geöffnet bleibt, bis der Druckausgleich zwischen dem jeweiligen Rad (1,2,3,4) und der Füllleitung (26, 27) sich eingestellt hat und erst dann der Druck in der Füllleitung (26, 27) gemessen wird.

9. Verfahren nach Anspruch 8, **dadurch gekennzeichnet, dass** nach erfolgter Druckmessung die jeweilige Füllleitung (26, 27) entleert wird.

10. Reifenfüllanlage eines Kraftfahrzeuges, welche besteht aus einer eine Kompressionsvorrichtung (10) und einen Druckspeicher (13) enthaltenden Druckluftquelle, von der aus Füllleitungen (26, 27) über ein Füllventil (20, 21) und Steuerleitungen (51,52,53,54) über ein Steuerventil (41,42,43,44) zu mindestens einem Radventil (5,6,7,8) führen, sowie aus einer Steuereinrichtung, wobei in zumindest einer der Füllleitungen (26, 27) radseitig des jeweiligen Füllventils (20,21) ein Drucksensor (61,62) angeordnet ist und jede Füllleitung (26,27) über eine Ablassleitung (28,29) und zumindest ein Ablassventil (22) entleerbar ist, **dadurch gekennzeichnet, dass** zusätzlich zu den Füllleitungen (26, 27) vorgesehene Steuerleitungen (51,52,53,54) über ein zusätzlich zu dem Füllventil (20, 21) vorgesehenes Steuerventil (41,42,43,44) zu mindestens einem Radventil (5,6,7,8) führen.

11. Reifenfüllanlage nach Anspruch 10, **dadurch gekennzeichnet, dass** jedes Füllventil (20,21) ein Dreistellungsventil ist, welches
- in seiner ersten Stellung die Füllleitung (26,27) mit der Druckluftquelle (13) verbindet,
- in seiner zweiten Stellung die Füllleitung (26,27) mit dem Ablassventil (22), verbindet,
- und in seiner dritten Stellung die Füllleitung (26,27) abschließt.

12. Reifenfüllanlage nach Anspruch 10, **dadurch gekennzeichnet, dass** von dem Ablassventil (22) eine Rückführleitung (24) über ein zweites Rückschlagventil (25) durch einen Lufttrockner und über ein zweites Ablassventil (18) in die Atmosphäre führt.

13. Reifenfüllanlage nach Anspruch 10, **dadurch gekennzeichnet, dass** die Druckluftzuleitung (17,17') von der Kompressoreinheit (10) über ein erstes Rückschlagventil (16) und eine Rückführleitung (24) in den Druckspeicher (13) führt und wobei stromabwärts des ersten Rückschlagventils (16) ein weiterer Drucksensor (60) angeordnet ist.

14. Reifenfüllanlage nach Anspruch 10, **dadurch gekennzeichnet, dass** die Kompressoreinheit (10) aus zwei hinsichtlich der von ihnen komprimierten Luft parallel geschalteten Kolbenverdichtern (11,12) besteht, welche über ein erstes Rückschlagventil (16) mit dem Druckspeicher verbunden sind.

## Claims

1. Method for operating a tire inflation system of a motor vehicle, wherein the tire inflation system is composed of a compressed air source which contains a compression device (10) and a pressure accumulator (13) and from which inflation lines (26, 27) lead via an inflation valve (20, 21) and control lines (51, 52, 53, 54) lead via a control valve (41, 42, 43, 44) to a wheel valve (5, 6, 7, 8), and of a control device, wherein
a) a set point tire pressure is acquired from operating variables,
b) the set point tire pressure is compared with the actual tire pressure last measured and it is decided whether air is to be fed to the respective tire (1, 2, 3, 4) or extracted from it,
c) compressed air is applied to the control line via the control valve and the wheel valve (5, 6, 7, 8) which is connected to the inflation line via a rotational input means and is arranged on the respective tire is controlled via the control line,
d) air is fed to the respective tire (1, 2, 3, 4) or extracted from it via the inflation line during a specific time period without accompanying pressure measurement,
e) the actual tire pressure in the inflation line (26, 27) is measured and compared with the set point tire pressure,
f) if the actual tire pressure does not correspond sufficiently precisely to the set point tire pressure, air is fed to the at least one tire via the inflation line (26, 27) or extracted from it during a specific time period without accompanying pressure measurement,
g) if the measured actual tire pressure corresponds sufficiently precisely to the set point tire pressure, the cycle in accordance with a) b) c) d) e) f) is not repeated again until after a specific time period or until a specific operating state occurs,
**characterized in that** control lines (51, 52, 53, 54) which are provided in addition to the inflation lines (26, 27) lead to a wheel valve (5, 6, 7, 8) via a control valve (41, 42, 43, 44) which is provided in addition to the inflation valve, and the wheel valve (5, 6, 7, 8) which is arranged on the respective tire is controlled with compressed air via the control line independently of the inflation line.

2. Method according to Claim 1, **characterized in that**, the specific time period during which air is fed to a tire by opening the respective control valve (41, 42, 43, 44) is determined from the current tire pressure, the pressure set point value and the container pressure.

3. Method according to Claim 2, **characterized in that** in order to inflate a tire, the inflation line (26, 27) is first connected to the pressure source (13) and the respective wheel valve (5, 6, 7, 8) is then opened by opening the respective control valve (41, 42, 43, 44) during the time period which is determined.

4. Method according to Claim 1, **characterized in that** the time period during which air is extracted from a tire by opening the respective control valve (41, 42, 43, 44) is determined from the current tire pressure and the pressure set point value.

5. Method according to Claim 4, **characterized in that**, in order to extract air from a tire, the inflation line (26, 27) is connected to a location with a relatively low air pressure (13; 23) and the compressed air which is located therein is either fed back to the compressed air source (13) and stored there or discharged into the surroundings by activating the respective control valve (41, 42, 43, 44) and therefore by opening the respective wheel valve (5, 6, 7, 8) during the specific time period.

6. Method according to Claim 4, **characterized in that**, in order to extract air from a tire, the inflation line can be emptied via a rapid-release venting valve (22).

7. Method according to Claim 1, **characterized in that**, in order to measure the tire pressure, the respective emptied inflation line (26, 27) is fluidicly connected to respective tire (1, 2, 3, 4) by actuating the respective wheel valve (5, 6, 7, 8) while said inflation line (26, 27) is closed off at its other end.

8. Method according to Claim 7, **characterized in that** the respective wheel valve (5, 6, 7, 8) remains opened until the pressure equalization between the respective wheel (1, 2, 3, 4) and the inflation line (26, 27) has occurred, and only then is the pressure in the inflation line (26, 27) measured.

9. Method according to Claim 8, **characterized in that** after the pressure has been measured the respective inflation line (26, 27) is emptied.

10. Tire inflation system of a motor vehicle which is composed of a compressed air source which contains a compression device (10) and a pressure accumulator (13) and from which inflation lines (26, 27) lead via an inflation valve (20, 21) and control lines (51, 52, 53, 54) lead via a control valve (41, 42, 43, 44) to at least one wheel valve (5, 6, 7, 8), and of a control device, wherein a pressure sensor (61, 62) is arranged in at least one of the inflation lines (26, 27), on the wheel side of the respective inflation valve (20, 21), and each inflation line (26, 27) can be emptied via a relief line (28, 29) and at least one relief valve (22), **characterized in that** control lines (51, 52, 53, 54) which are provided in addition to the inflation lines (26, 27) lead to at least one wheel valve (5, 6, 7, 8) via a control valve (41, 42, 43, 44) which is provided in addition to the inflation valve (20, 21).

11. Tire inflation system according to Claim 10, **characterized in that** each inflation valve (20, 21) is a three-position valve which
- in its first position connects the inflation line (26, 27) to the compressed air source (13),
- in its second position connects the inflation line (26, 27) to the relief valve (22),
- and in its third position closes off the inflation line (26, 27).

12. Tire inflation system according to Claim 10, **characterized in that** a return line (24) leads from the relief valve (22) via a second non-return valve (25) through an air drier and via a second relief valve (18) into the atmosphere.

13. Tire inflation system according to Claim 10, **characterized in that** the compressed air feed line (17, 17') leads from the compressor unit (10) into the pressure accumulator (13) via a first non-return valve (16) and a return line (24), and wherein a further pressure sensor (60) is arranged downstream of the first non-return valve (16).

14. Tire inflation system according to Claim 10, **characterized in that** the compressor unit (10) is composed of two piston compressors (11, 12) which are connected in parallel in terms of the air which is compressed by them and which are connected to the pressure accumulator via a first non-return valve (16).

## Revendications

1. Procédé d'utilisation d'une installation de gonflage de pneu pour véhicule automobile, l'installation de gonflage de pneu étant constituée d'un dispositif de compression (10) et d'une source d'air comprimé contenant une réserve (13) sous pression et raccordée par des conduits de gonflage (26, 27) à une soupape de roue (5, 6, 7, 8) par une soupape de gonflage (20, 21) et des conduits de commande (51, 52, 53, 54) par l'intermédiaire d'une soupape de commande (41, 42, 43, 44), ainsi que d'un dispositif de commande, procédé dans lequel :
a) une pression de consigne de pneu est déterminée à partir des grandeurs de fonctionnement,
b) la pression de consigne de pneu est comparée à la dernière pression effectivement mesurée du pneu et il est décidé si de l'air doit être apporté au pneu (1, 2, 3, 4) concerné ou en être enlevé,
c) le conduit de commande est alimenté en air sous pression par la soupape de commande et la soupape de roue (5, 6, 7, 8) reliée au conduit de gonflage par une entrée rotative et disposée sur le pneu concerné est commandée par le conduit de commande,
d) de l'air est apporté au pneu (1, 2, 3, 4) concerné ou en est prélevé par le conduit de gonflage pendant une durée définie qui n'est pas accompagnée d'une mesure de pression,
e) la pression effective du pneu est mesurée dans le conduit de gonflage (26, 27) et est comparée à la pression de consigne du pneu,
f) si la pression effective du pneu ne correspond pas de manière suffisamment précise à la pression de consigne du pneu, de l'air est apporté au pneu ou aux pneus par le conduit de gonflage (26, 27) pendant une durée définie qui n'est pas accompagnée d'une mesure de pression ou en est prélevé,
g) si la pression effective mesurée sur le pneu correspond de manière suffisamment précise à la pression de consigne du pneu, le cycle a), b), c), d), e) et f) n'est répété qu'après une durée définie ou qu'après que soit intervenu un état défini de fonctionnement,
**caractérisé en ce que**
des conduits de commande (51, 52, 53, 54) prévus en plus des conduits de gonflage (26, 27) conduisent à une soupape de roue (5, 6, 7, 8) par l'intermédiaire d'une soupape de commande (41, 42, 43, 44) prévue en plus de la soupape de gonflage et
**en ce que** la soupape de roue (5, 6, 7, 8) disposée sur le pneu concerné est commandée par de l'air comprimé par l'intermédiaire du conduit de commande et indépendamment du conduit de gonflage.

2. Procédé selon la revendication 1, **caractérisé en ce que** la durée définie pendant laquelle de l'air est apporté au pneu par ouverture de la soupape de commande (41, 42, 43, 44) concernée est déterminée à partir de la pression effective du pneu, de la valeur de consigne de pression et de la pression qui règne dans le récipient.

3. Procédé selon la revendication 2, **caractérisé en ce que** pour gonfler un pneu, le conduit de gonflage (26, 27) est d'abord relié à la source de pression (13) et ensuite, par ouverture de la soupape de commande (41, 42, 43, 44) concernée, la soupape de roue (5, 6, 7, 8) concernée est ouverte pendant la durée déterminée.

4. Procédé selon la revendication 1, **caractérisé en ce que** la durée pendant laquelle de l'air est enlevé du pneu par ouverture de la soupape de commande (41, 42, 43, 44) concernée est déterminée à partir de la pression effective du pneu et de la valeur de consigne de pression.

5. Procédé selon la revendication 4, **caractérisé en ce que** pour enlever de l'air d'un pneu, le conduit de gonflage (26, 27) est relié à un emplacement où la pression (13; 23) de l'air est plus basse et l'air comprimé qui s'y trouve est renvoyé vers la source (13) d'air comprimé par actionnement de la soupape de commande (41, 42, 43, 44) concernée et donc par ouverture de la soupape de roue (5, 6, 7, 8) concernée pendant la durée définie, y est conservé ou est dégagé dans l'environnement.

6. Procédé selon la revendication 4, **caractérisé en ce que** le conduit de gonflage peut être vidé par une soupape (22) d'évacuation rapide d'air qui sert à enlever l'air d'un pneu.

7. Procédé selon la revendication 1, **caractérisé en ce que** pour la mesure de la pression du pneu, le conduit de gonflage (26, 27) vidé est relié à écoulement au pneu concerné (1, 2, 3, 4) par commande de la soupape de roue (5, 6, 7, 8) concernée, pendant que son autre extrémité est fermée.

8. Procédé selon la revendication 7, **caractérisé en ce que** la soupape de roue (5, 6, 7, 8) concernée reste ouverte jusqu'à ce qu'il se soit établi un équilibre de pression entre la roue (1, 2, 3, 4) concernée et le conduit de gonflage (26, 27), la pression qui règne dans le conduit de gonflage (26, 27) étant ensuite mesurée.

9. Procédé selon la revendication 8, **caractérisé en ce qu'**après que la pression a été mesurée, le conduit de gonflage (26, 27) concerné est vidé.

10. Installation de gonflage de pneu d'un véhicule automobile, constitué d'une source d'air comprimé qui contient un dispositif (10) de compression et un réservoir (13) sous pression et de laquelle des conduits du gonflage (26, 27) conduisent à au moins une soupape de roue (5, 6, 7, 8) par une soupape de gonflage (20, 21) et des conduits de commande (51, 52, 53, 54) par l'intermédiaire d'une soupape de commande (41, 42, 43, 44), ainsi que d'un dispositif de commande, un détecteur de pression (61, 62) étant disposé dans au moins l'un des conduits de gonflage (26, 27) du côté roue de la soupape de gonflage (20, 21) concernée, chaque conduit de gonflage (26, 27) pouvant être vidé par un conduit d'évacuation (28, 29) et au moins une soupape d'évacuation (22),
**caractérisée en ce que**
des conduits de commande (51, 52, 53, 54) prévus en plus des conduits de gonflage (26, 27) conduisent à au moins une soupape de roue (5, 6, 7, 8) par l'intermédiaire d'une soupape de commande (41, 42, 43, 44) prévue en plus de la soupape de remplissage (20, 21).

11. Installation de gonflage de pneu selon la revendication 10, **caractérisée en ce que** chaque soupape de gonflage (20, 21) est une soupape à trois positions qui,
- dans sa première position, relie le conduit de gonflage (26, 27) à la source (13) d'air sous pression,
- dans sa deuxième position, relie le conduit de gonflage (26, 27) à la soupape d'évacuation (22) et
- dans sa troisième position, ferme le conduit de gonflage (26, 27).

12. Installation de gonflage de pneu selon la revendication 10, **caractérisée en ce qu'**un conduit de renvoi (24) conduit à l'atmosphère entre la soupape d'évacuation (22) par l'intermédiaire d'une deuxième soupape anti-retour (25), un sécheur d'air et une deuxième soupape d'évacuation (18).

13. Installation de gonflage de pneu selon la revendication 10, **caractérisée en ce que** le conduit (17, 17') d'amenée d'air comprimé conduit de l'unité de compression (10) à la réserve sous pression (13) par une première soupape anti-retour (16) et un conduit de renvoi (24), un autre détecteur de pression (60) étant disposé en aval de la première soupape anti-retour (16).

14. Installation de gonflage de pneu selon la revendication 10, **caractérisée en ce que** l'unité de compression (10) est constituée de deux compresseurs à piston (11, 12) raccordés en parallèle par rapport à l'air qu'il comprime et relié à la réserve sous pression par une première soupape anti-retour (16).
